Europäisches Patentamt

European Patent Office

Office européen des brevets

(19)

(11) Veröffentlichungsnummer: **0 234 029**
**B1**

(12) **EUROPÄISCHE PATENTSCHRIFT**

(45) Veröffentlichungstag der Patentschrift:
**08.03.89**

(51) Int. Cl.⁴: **B65G 1/10**

(21) Anmeldenummer: **86117384.7**

(22) Anmeldetag: **13.12.86**

(54) **Bremsvorrichtung für Rollpaletten.**

(30) Priorität: **27.02.86 DE 8605224 U**

(43) Veröffentlichungstag der Anmeldung:
**02.09.87 Patentblatt 87/36**

(45) Bekanntmachung des Hinweises auf die Patenterteilung:
**08.03.89 Patentblatt 89/10**

(84) Benannte Vertragsstaaten:
**AT BE CH DE ES FR GB GR IT LI LU NL SE**

(56) Entgegenhaltungen:
**DE-A- 1 953 901**

(73) Patentinhaber: **Hermann Schmidt Maschinenfabrik,
D-4670 Lünen(DE)**

(72) Erfinder: **Neve, Volker, Münsterstrasse 93,
D-4670 Lünen(DE)**
Erfinder: **Schmidt, Hermann, Bruckner Strasse 37,
D-4670 Lünen(DE)**

(74) Vertreter: **Patentanwälte Meinke und Dabringhaus
Dipl.-Ing. J. Meinke Dipl.-Ing. W. Dabringhaus,
Westenhellweg 67, D-4600 Dortmund 1(DE)**

## Beschreibung

Die Erfindung richtet sich auf eine Vorrichtung zur Abbremsung von Rollpaletten in Regalen, wobei die Rollpaletten wenigstens eine in Rollrichtung außerhalb der Laufschiene angeordnete ebene Fläche an ihrer Unterseite aufweisen.

Es ist aus DE-A 1 953 901 bekannt, Paletten über sogenannte Rollengänge zu fördern, auch in Regalen, wobei zur Förderung dieser Paletten eine Regalneigung von wenigstens 4% Gefälle notwendig ist. Zur Abbremsung der auf diesen Rollgängen geförderten Paletten werden einige der Rollen oder Walzen am Ende jeder Bahn über Bremsrollen gebremst. Diese indirekte Bremsung hat u.a. den Nachteil, daß die Paletten durch die Vielzahl der Rollen schlecht ausgehoben werden können, da kein Freiraum zur Verfügung steht. Gleichzeitig ist der Lagerungsaufwand dieser Rollen vergleicherweise hoch, da sie auch verhältnismäßig dicht verlegt werden müssen. Durch das notwendige Gefälle wird auch Bauhöhe eingebüßt, da die entsprechenden Kopfräume über den Rollenbahnen vorgesehen sein müssen.

Aufgabe der Erfindung ist die Schaffung einer Lösung, mit der die Abbremsung von Rollpaletten vereinfacht wird, die insbesondere auch ein geringeres Gefälle möglich macht.

Bei einer Vorrichtung der eingangs bezeichneten Art wird diese Aufgabe gemäß der Erfindung dadurch gelöst, daß sie mit einer sich in der Bremslage an die an der Unterseite der Rollpaletten angeordnete Fläche anlegenden Bremsrolle ausgerüstet ist.

Die Vorrichtung hat einmal alle diejenigen Vorteile, die mit Rollpaletten bereits gegeben sind; so sind Neigungen von etwa 1,5% erreichbar, das Ausheben der Paletten ist bei dieser Gestaltung einfach u. dgl. mehr. Zum anderen hat die erfindungsgemäße Gestaltung den Vorteil, daß nur eine einzige Bremsrolle notwendig ist. Zusätzliche weitere Rollen sind entbehrlich. Die Bremsrolle kann je nach örtlichen Gegebenheiten einfach angeordnet werden. Sie kann etwa in der Mitte zwischen den beiden Laufschienen vorgesehen sein, sie kann aber außermittig angeordnet werden, wenn dies notwendig werden sollte. Sollen größere Bremsleistungen erreicht werden, können auch zwei parallele Bremsrollen oder zwei hintereinander angeordnete Bremsrollen vorgesehen sein.

In Ausgestaltung sieht die Erfindung vor, daß die Bremstrommel an einem an einer Seite schwenkbar angeordneten und an der anderen Seite unter Federkraft stehenden Rahmen angeordnet ist. Diese Rahmenlagerung ist vergleichsweise einfach, sie ist robust und wartungsfrei. Die Bremskraft kann durch die Federung besonders exakt eingestellt werden.

Die Erfindung sieht auch vor, daß die Bremstrommel mit einer Fliehkraftkupplung ausgerüstet ist. Derartige Fliehkraftkupplungen sind grundsätzlich bekannt. Sie bewirken, daß die auflaufende Rollpalette zunächst die Bremstrommel beschleunigt, sodann wird die Kupplung durch die Fliehkraft betätigt und die Bremswirkung setzt ein.

Zweckmäßig sind die Bremstrommeln mit einer reibungserhöhenden Beschichtung ausgerüstet, was für sich gesehen bekannt ist, im vorliegenden Fall aber eine zweckmäßige Gestaltung der Bremstrommel darstellt.

Schließlich sieht die Erfindung auch vor, daß in Bremsrichtung auch zwei hintereinander angeordnete Bremstrommeln unterschiedlich starker Vorspannung angeordnet sind. Diese Gestaltung läßt ein stufenweises Abbremsen der auflaufenden Rollpaletten zu.

Die Erfindung ist nachstehend anhand der Zeichnung beispielsweise näher erläutert. Diese zeigt in

Fig. 1 eine vereinfachte perspektivische Darstellung eines Ausschnittes eines mit der Erfindung ausgerüsteten Regales und in

Fig. 2 eine vereinfachte Seitenansicht einer Vorrichtung nach der Erfindung.

Auf einem mit 1 bezeichneten Durchlaufregal werden Rollpaletten 2 auf Laufschienen 3 gefördert. Die Rollpaletten 2 weisen im dargestellten Beispiel auf ihrer Unterseite 4 eine Bremsschiene 5 auf, die mit einer nach unten weisenden ebenen Fläche versehen ist.

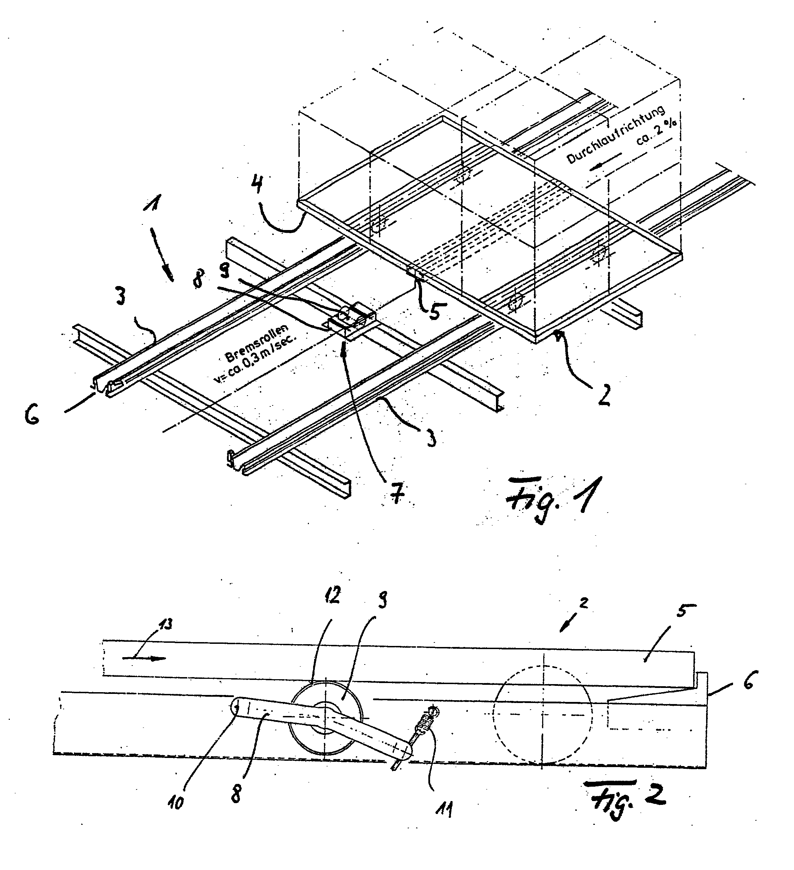

Kurz vor dem mit 6 bezeichneten Ende der Laufschienen 3 ist in der Mitte eine allgemein mit 7 bezeichnete Vorrichtung zum Abbremsen der Rollpalette 2 vorgesehen. Diese Vorrichtung 7 besteht aus einem Rahmen 8, der eine Bremsrolle 9 trägt, die in Seitenansicht in Fig. 2 näher dargestellt ist. Der Rahmen 8 ist um eine Achse 10 schwenkbar ortsfest gelagert und wird an seiner der Schwenkachse 10 abgewandten Seite über eine Feder 11 nach oben gezogen.

Die Bremsrolle 9 weist einen reibungserhöhenden Belag 12 auf und im Inneren eine Fliehkraftkupplung, was nicht näher dargestellt ist.

Greift die Rollpalette 2 in Richtung des Pfeiles 13 in Fig. 2 auf die zunächst in die Bewegungsbahn hineinragende Bremsrolle 9 auf, so wird die Bremsrolle 9 gegen die Kraft der Feder 11 nach unten verschwenkt und beschleunigt. Die im Inneren befindliche Fliehkraftkupplung kuppelt ein, die Bremstrommel 9 verzögert ihre Umlaufgeschwindigkeit, und damit übt sie eine Bremswirkung aus, so daß die Palette 2 vor dem Endanschlag 6 zum Stehen kommt.

Natürlich ist das beschriebene Ausführungsbeispiel der Erfindung noch in vielfacher Hinsicht abzuändern, ohne den Grundgedanken zu verlassen. So kann beispielsweise die Bremstrommel 9 paarweise seitlich neben den Laufschienen 3 vorgesehen sein, aber auch beispielsweise an den seitlichen Stirnkanten der Rollpaletten 2 zur Anlage kommen, wenn dies aus Platzgründen notwendig werden sollte.

## Patentansprüche

1. Vorrichtung zur Abbremsung von Rollpaletten in Regalen, wobei die Rollpaletten wenigstens eine in Rollrichtung außerhalb der Laufschienen angeordnete ebene Fläche an ihrer Unterseite aufweisen, dadurch gekennzeichnet, daß sie mit einer sich in

der Bremslage an dieser Fläche anlegenden Bremstrommel (9) ausgerüstet ist.

2. Vorrichtung nach Anspruch 1, dadurch gekennzeichnet, daß die Bremstrommel (9) an einem an einer Seite (10) schwenkbar angeordneten und an der anderen Seite (11) unter Federkraft stehenden Rahmen (8) angeordnet ist.

3. Vorrichtung nach Anspruch 1 oder 2, dadurch gekennzeichnet, daß die Bremstrommel (9) mit einer Fliehkraftkupplung ausgerüstet ist.

4. Vorrichtung nach einem der vorangehenden Ansprüche, dadurch gekennzeichnet, daß die Bremstrommel (9) mit einer reibungserhöhenden Beschichtung (12) ausgerüstet ist.

5. Vorrichtung nach einem der vorangehenden Ansprüche, dadurch gekennzeichnet, daß in Bremsrichtung wenigstens zwei hintereinander angeordnete Bremstrommeln (9) unterschiedlich starker Vorspannung angeordnet sind.

**Claims**

1. Device for the braking of roller pallets in shelves, in which the roller pallets have on their underside at least one flat surface which is arranged in the rolling direction outside the track rails, characterized in that it is equipped with a brake drum (9) which rests against this surface in the braking position.

2. Device according to Claim 1, characterized in that the brake drum (9) is arranged on a frame (8), which is orientably arranged on one side (10) and on the other side (11) is under elastic force.

3. Device according to Claim 1 or 2, characterized in that the brake drum (9) is equipped with a centrifugal clutch.

4. Device according to one of the preceding claims, characterized in that the brake drum (9) is equipped with a coating (12) which increases friction.

5. Device according to one of the preceding claims, characterized in that at least two brake drums (9), with initial stress of differing intensity, are arranged one behind the other in the braking direction.

**Revendications**

1. Dispositif de freinage de palettes roulantes sur des rayonnages, les palettes roulantes présentant sur leur face inférieure au moins une surface plane disposée suivant la direction de roulement en dehors des rails de roulement, caractérisé en ce qu'il est équipé d'un tambour de frein (9) qui, en position de freinage, s'applique sur cette surface.

2. Dispositif selon la revendication 1, caractérisé en ce que le tambour de frein (9) est disposé sur un cadre (8) susceptible de pivotement d'un côté (10) et soumis de l'autre côté (11) à la force d'un ressort.

3. Dispositif selon la revendication 1 ou 2, caractérisé en ce que le tambour de frein (9) est équipé d'un embrayage à force centrifuge.

4. Dispositif selon l'une des revendications qui précèdent, caractérisé en ce que le tambour de frein (9) est pourvu d'un revêtement (12) augmentant le frottement.

5. Dispositif selon l'une des revendications qui précèdent, caractérisé en ce que suivant la direction de freinage sont disposés l'un derrière l'autre deux tambours de freins (9) soumis é des forces de précontraintes différentes.

*Fig. 1*

Durchlaufrichtung ca. 2 %

Bremsrollen v= ca.0,3 m/sec.

*Fig. 2*